# EUROPEAN PATENT SPECIFICATION

(11) **EP 0 854 168 B1**
(45) Date of publication and mention of the grant of the patent: **02.04.2003**
(21) Application number: 98300271.8
(22) Date of filing: 15.01.1998
(51) Int. Cl.: C08K 5/47, C08L 21/00

(54) **Rubber composition**
Kautschukzusammensetzung
Composition de caoutchouc

(30) Priority: 16.01.1997 JP 571797
(43) Date of publication of application: 22.07.1998
(73) Proprietor: Bridgestone Corporation, Tokyo 104-8340 (JP)
(72) Inventor: Hojo, Masahiro, c/o Bridgestone Corporation, Tokyo 104 (JP)
(74) Representative: Whalley, Kevin

(56) References cited:
- DE-A- 2 056 762
- US-A- 3 852 251
- US-A- 4 430 466

## Description

The present invention relates to a rubber composition, and more particularly to a rubber composition used for tire treads and the like having high breakage resistance after heat aging.

In a rubber composition composed of natural rubber and/or diene-based synthetic rubber, the lowering of breakage resistance during heat aging due to oxygen in the air is a problem which cannot be avoided to a certain extent, and various antioxidants have been developed for solving this problem. Among such antioxidants, a 2-mercapto-benzothiazole compound which has been conventionally used as a vulcanization accelerator is known to have an effect as an antioxidant.

Recently, with the increasing engine power of automobiles, the construction of highway networks and the development of low profile tires, the temperature of a tire while driving has increased, and the physical properties of the tire are showing greater changes than ever during heat aging. Generally, the problem is solved by increasing the amount of antioxidant. However, it is difficult to increase the amount of antioxidant more than currently used since bloom then occurs.

In addition, when the amount of a 2-mercaptobenzothiazole compound, such as 2-mercaptobenzothiazolyl disulfide, is increased, because this compound is a vulcanization accelerator, the modulus increases and sufficient breakage resistance properties cannot be obtained, and in particular, elongation at break is markedly decreased.

Further, as disclosed in Japanese Patent Application Laid-Open (JP-A) No. 56-139542 and Japanese Patent Application Publication (JP-B) No. 3-2183, 4-methyl-2-mercaptobenzothiazole, 4-methyl-2-mercaptobenzothiazolyl disulfide, 4-ethyl-2-mercaptobenzothiazole and 4-ethyl-2-mercaptobenzothiazolyl disulfide are effective at suppressing increasing modulus of a tire after driving or after heat aging and are therefore expected to improve elongation at break after heat aging. In fact, these 2-mercaptobenzothiazole compounds can improve elongation at break after heat aging as expected when used in a composition mainly composed of SBR. However, in a composition containing not less than 50 parts by weight of natural rubber or polyisoprene rubber based on 100 parts by weight of rubber components, because these 2-mercaptobenzothiazole compounds cause a marked lowering of breaking strength after heat aging, the desired object cannot be completely achieved. Moreover, these 4-alkyl-2-mercaptobenzothiazole compounds, when used in a composition mainly composed of SBR, suppress increasing modulus after heat aging and are not able to improve breaking strength although elongation at break improves.

The present invention has been made in view of the above-described fact, and the object thereof is to provide a rubber composition having higher breakage resistance after heat aging as compared with the conventional technique.

The mercaptobenzothiazole compound used as a vulcanization accelerator as described above is conventionally known to have a role as an antioxidant. The present inventor has noticed the effect of this compound as an antioxidant, and has investigated to obtain a higher antioxidant effect in consideration of the mechanism suggested by G. Scott et al. and, as a result, has found that the object can be accomplished by the following means.

That is, the present invention provides a rubber composition comprising 0.2 to 10 parts by weight of at least one compound selected from 2-mercaptobenzothiazole compounds containing an alkoxy group represented by the following general formulae (I), (II) and (III) based on 100 parts by weight of at least one rubber raw material selected from natural rubber and diene-based synthetic rubbers: 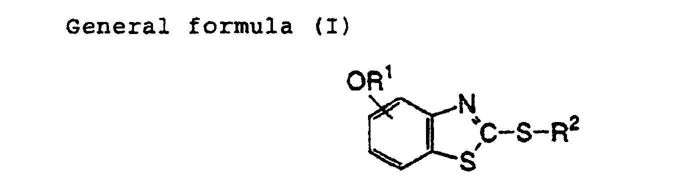 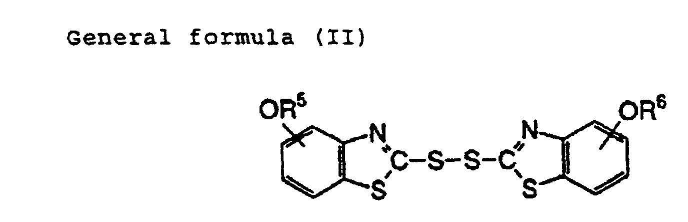 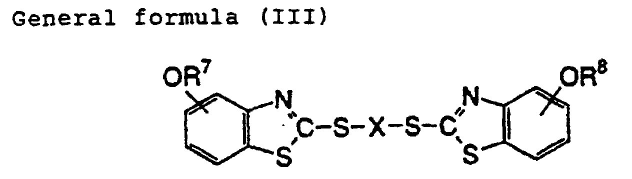 wherein the position of the alkoxy group in the benzothiazole ring in the general formulae (I), (II) and III is 4;
wherein R¹ represents an alkyl group, an alkenyl group or a cycloalkyl group having 1 to 8 carbon atoms; R² represents a hydrogen atom or an amino group represented by -N(R³)R⁴; R³ and R⁴ each independently represent a hydrogen atom or an alkyl group having 2 to 4 carbon atoms or a cyclohexyl group wherein, R³ and R⁴ do not simultaneously represent a hydrogen atom; R⁵ and R⁶ each independently represent an alkyl group, an alkenyl group or a cycloalkyl group having 1 to 8 carbon atoms; X represents a Zn atom, a Cu atom or an amino group represented by >N-R⁹; R⁹ represents an alkyl group having 2 to 4 carbon atoms or a cyclohexyl group; and R⁷ and R⁸ have the same meaning as R⁵.

The rubber raw material used in the present invention is at least one material selected from natural rubber and diene-based synthetic rubbers. Namely, natural rubber (NR) and many diene-based synthetic rubbers may be used alone or as a blend of two or more of them. Examples of diene-based synthetic rubbers include polyisoprene rubber (IR), polybutadiene rubber (BR), styrene-butadiene rubber (SBR), butyl rubber (IIR), chlorobutyl rubber, bromobutyl rubber, acrylonitrile-butadiene rubber (NBR), chloroprene rubber (CR) and the like.

In the present invention, among these rubber raw materials, for example, NR alone, SBR alone, an NR/SBR blend, an NR/SBR/BR blend and the like are ideal to use. When a blend of two or more rubbers is used as the rubber raw material, it is preferable that not less than 50 parts by weight of NR and/or IR is contained based on 100 parts by weight of the rubber raw material.

The 2 - mercaptobenzothiazole compound containing an alkoxy group which is used as a vulcanization accelerator in the present invention is represented by the above-described general formula (I), (II) or (III), and is used alone or in combination of two or more.

In the formulae, R¹ represents an alkyl group, an alkenyl group or a cycloalkyl group having 1 to 8 carbon atoms. R² represents a hydrogen atom or an amino group represented by -N(R³)R⁴, R³ and R⁴ each independently represent a hydrogen atom or an alkyl group having 2 to 4 carbon atoms or a cyclohexyl group (however, R³ and R⁴ cannot simultaneously represent hydrogen atoms). R⁵ and R⁶ each independently represent an alkyl group, an alkenyl group or a cycloalkyl group having 1 to 8 carbon atoms. X represents a Zn atom, a Cu atom or an amino group represented by >N-R⁹. R⁹ represents an alkyl group having 2 to 4 carbon atoms or a cyclohexyl group. R⁷ and R⁸ have the same meaning as R⁵.

In these formulae, it is preferable from the point of view of the effects of the invention that alkoxy groups -OR¹, -OR⁵, -OR⁶, -OR⁷ and -OR⁸ each independently represent a methoxy group, ethoxy group or butoxy group, and an ethoxy group is more preferable.

Examples of the alkoxy group-containing 2-mercaptobenzothiazole compound represented by the general formula (I) include 4-methoxy-2-mercaptobenzothiazole, 4-ethoxy-2-mercaptobenzothiazole, 4-butoxy-2-mercaptobenzothiazole, N-tert-butyl-4-methoxy-2-benzothiazolylsulfenamide, N-tert-butyl-4-ethoxy-2-benzothiazolylsulf enamide, N-tert-butyl-4-butoxy-2-benzothiazolylsulfenamide, N-ethyl-4-methoxy-2-benzothiazolylsulfenamide, N-ethyl-4-ethoxy-2-benzothiazolylsulfenamide, N-ethyl-4-butoxy-2-benzothiazolylsulfenamide, N-cyclohexyl-4-methoxy-2-benzothiazolylsulfenamide, N-cyclohexyl-4-ethoxy-2-benzothiazolylsulfenamide, N-cyclohexyl-4-butoxy-2-benzothiazolylsulfenamide, N,N-dicyclohexyl-4-methoxy-2-benzothiazolylsulfenamide, N,N-dicyclohexyl-4-ethoxy-2-benzothiazolylsulfenamide, N,N-dicyclohexyl-4-butoxy-2-benzothiazolylsulfenamide,

Examples of 2-mercaptobenzothiazole compound containing an alkoxy group represented by the general formula (II) include di-4-methoxy-2-benzothiazolyl disulfide, di-4-ethoxy-2-benzothiazolyl disulfide, di-4-butoxy-2-benzothiazolyl disulfide.

Examples of the 2-mercaptobenzothiazole compound containing an alkoxyl group represented by the general formula (III) include zinc salt of 4-methoxy-2-mercaptobenzothiazole, zinc salt of 4-ethoxy-2-mercaptobenzothiazole, zinc salt of 4-butoxy-2-mercaptobenzothiazole, copper salt of 4-methoxy-2-mercaptobenzothiazole, copper salt of 4-ethoxy-2-mercaptobenzothiazole, copper salt of 4-butoxy-2-mercaptobenzothiazole, N-ethyl-(4-methoxy-2-benzothiazolyl)sulfenimide, N-t-butyl(4-methoxy-2-benzothiazolyl)sulfenimide, N-cyclohexyl(4-methoxy-2-benzothiazolyl)sulfenimide, N-ethyl(4-ethoxy-2-benzothiazolyl)sulfenimide, N-t-butyl(4-ethoxy-2-benzothiazolyl)sulfenimide, N-cyclohexyl(4-ethoxy-2-benzothiazolyl) sulfenimide, N-ethyl-(4-butoxy-2-benzothiazolyl)sulfenimide, N-t-butyl(4-butoxy-2-benzothiazolyl)sulfenimide, N-cyclohexyl(4-butoxy-2-benzothiazolyl)sulfenimide, like.

In these 2-mercaptobenzothiazole compounds containing an alkoxy group which are vulcanization accelerators, the position of the alkoxy group in the benzothiazole ring in the general formulae (I), (II) and (III) is 4. A benzothiazole compound having an alkoxy group at the 4 position in a benzothiazole ring is advantageous in view of the easy availability of the material and the ease of synthesis. Moreover, benzothiazolylsulfenamide, benzothiazolyl disulfide and benzothiazolylsulfenimide having an alkoxy group at the 4 position in a benzothiazole ring are also advantageous in view of their scorch properties. Further, a compound having an alkoxy group at the 4 position in a benzothiazole ring is more advantageous since the compound suppresses increasing modulus of a rubber composition during heat aging.

The production methods of these vulcanization accelerators are not particularly restricted, and these accelerators can be easily produced by using, for example, the methods disclosed in Japanese Patent Application Laid-Open (JP-A) No. 49-93361 and the like.

The amount blended of the 2-mercaptobenzothiazole compound containing an alkoxy group which is a vulcanization accelerator used in the present invention is from 0.2 to 10 parts by weight, preferably from 0.5 to 7 parts by weight, based on 100 parts by weight of rubber raw materials. When the amount blended is less than 0. 2 parts by weight, the effect obtained is insufficient, and when the amount blended is over 10 parts by weight, workability such as the scorch property is lowered, and further effects cannot be obtained.

In addition to these vulcanization accelerators used in the present invention, thiazole-type vulcanization accelerators such as 2-mercaptobenzothiazolyl disulfide, N-t-butylbenzothiazolylsulfenamide, and N-cyclohexylbenzothiazolylsulfenamide, as well as thiuram type vulcanization accelerators such as tetra(2-ethylhexyl)thiuram disulfide and tetramethylthiuram disulfide which are widely-used vulcanization accelerators can be suitably blended.

The reinforcing filler which can be used in the present invention is not particularly restricted, however, at least one compound selected from inorganic fillers such as carbon black and silica is usually used. As the carbon black, for example, SAF, ISAF, HAF, FEF, GPF and the like are preferred. The carbon black is preferably used in an amount from 20 to 150 parts by weight based on 100 parts by weight of rubber raw materials. When the amount of the carbon black is less than 20 parts by weight, the reinforcing effect of the carbon black is insufficient, and when over 150 parts by weight is used, workability is markedly decreased.

In addition to the above-described components, blending agents usually used in the rubber industry such as softening agents, aging preventing agents, vulcanization agents, vulcanization accelerators, silane coupling agents and the like can be suitably blended into the rubber composition of the present invention as needed.

The rubber composition of the present invention is obtained by kneading using a kneader such as a roll, internal mixer, banbury mixer and the like. After shaping processing, the rubber composition is subjected to vulcanization and used for tire treads and the like.

The reaction mechanism of mercaptobenzothiazole as an antioxidant was studied in detail by G. Scott et al., (Eur. Polym. J., 11, 783(1975)), and mercaptobenzothiazole and Zn salt thereof are known to be extremely effective at decomposing peroxides produced by the oxidation of rubber. It is hypothesized that the 2-mercaptobenzothiazole compound containing an alkoxy group used in the present invention obtains higher reactivity with peroxides and greater effectiveness as an antioxidant by the introduction of an alkoxy group having a high electron donating property into an aromatic monocyclic ring.

The following Examples further illustrate the present invention in detail but are not to be construed as limiting the scope thereof.

### Preparation and evaluation of rubber composition

### (Examples 1 to 14) (Comparative Examples 1 to 14)

According to basic blending formulations shown in Table 1 and separate blending formulations shown in Tables 2 to 6, the rubber composition was prepared by kneading with a normal banbury mixer. This rubber composition was subjected to vulcanization at 145°C for a period of time corresponding to 1.5 to 2.0-fold of the T'90 value obtained by measurement at 145°C using a MDR2000 manufactured by US Flexis Corp. (formerly Monsanto Corp.). Initial breakage resistance and breakage resistance after heat aging of this vulcanized material were measured according to the following methods. The results are shown in Tables 2 to 6.

### Initial breakage resistance

A tension test using a sample taken before heat aging, was conducted according to JIS K 6301 (1975) to ascertain tensile strength at break (Tb), elongation at break (Eb) and tensile strength at 200% elongation (M200).

### Breakage resistance after heat aging

Heat aging was conducted for a prescribed time (24 hours or 72 hours) in a 100°C gear oven. The aged material was then taken out of the oven and allowed to stand for 6 hours at room temperature. It was then subjected to a tension test to ascertain Tb, Eb and M200. Further, changing ratios of Tb, Eb and M200 after 24 hour and 72 hour heat aging to the initial Tb, Eb and M200 were also ascertained.

Then, using treads made of the rubber compositions of Examples 2, and Comparative Example 2, tires of size 205/50R16 were made experimentally, and the chunk property of each tire at an internal pressure of 2 kg/cm² was measured by the following methods. The results are shown in Tables 2 and 3.

### Chunk property

The test was performed by driving the tires for 15 laps around the Bridgestone Company test course and then looking for chips of the tire tread portion with the naked eye. The value is expressed against an index whereby the new tire in Comparative Example 2 has the value of 100. Further, the tires used in the evaluation were those which showed 50% abrasion of treads under normal driving conditions.

**Table 1**

| Blending component | Parts by weight |
|---|---|
| Rubber raw material | 100 |
| Carbon black ¹⁾ | Variable |
| Aromatic oil | 25 |
| Stearic Acid | 2 |
| Zinc oxide | 3 |
| Antioxidant ²⁾ | 2 |
| Vulcanization accelerator | Variable |
| Sulfur | 1.5 |

| | |
|---|---|
| 1) Ceast 3H (manufactured by Tokai Carbon K.K.) | |
| 2) Notrak 6C (manufactured by Oouchi Shinko Kagaku Kogyo K.K.) | |

**Table 2**

| | | Comparative example | | | | Example | | | |
|---|---|---|---|---|---|---|---|---|---|
| | | 1 | 2 | 3 | 4 | 1 | 2 | 3 | 4 |
| Formulation (parts by weight) | SBR | 100 | 100 | 100 | 100 | 100 | 100 | 100 | 100 |
| | NR | -- | -- | -- | -- | -- | -- | -- | -- |
| | BR | -- | -- | -- | -- | -- | -- | -- | -- |
| | Carbon black | 50 | 50 | 50 | 50 | 50 | 50 | 50 | 50 |
| | | | | | | | | | |
| | Known vulcanization accelerator X | 1.5 | 3 | 5 | 7 | -- | - - | - - | - - |
| | | | | | | | | | |
| | Known vulcanization accelerator Y | -- | -- | - - | -- | -- | - - | -- | -- |
| | | | | | | | | | |
| | Vulcanization accelerator A of the present invention | -- | -- | -- | -- | 15 | 3 | 5 | 7 |
| | | | | | | | | | |
| | Known vulcanization accelerator Z | -- | -- | -- | -- | -- | -- | -- | -- |
| | | | | | | | | | |
| | Vulcanization accelerator B of the present invention | -- | -- | -- | -- | -- | -- | -- | -- |
| | | | | | | | | | |
| | Vulcanization accelerator C of the present invention | -- | -- | -- | -- | -- | -- | -- | -- |
| Physical properties | Initial | | | | | | | | |
| | Tb(MPa) | 22 | 24.2 | 21.7 | 20.2 | 24.6 | 24.7 | 22.9 | 20. 1 |
| | Eb(%) | 600 | 550 | 480 | 451 | 631 | 581 | 510 | 472 |
| | M200(MPa) | 4.2 | 5.2 | 6.4 | 7.6 | 3.9 | 5.4 | 6.3 | 7.5 |
| | After aging for 24 hours at 100°C | | | | | | | | |
| | Tb(MPa) | 20.2 | 21.7 | 20 | 18.6 | 23.1 | 23.3 | 22.8 | 19.8 |
| | Eb(%) | 560 | 460 | 400 | 360 | 610 | 570 | 530 | 460 |
| | M200(MPa) | 4.9 | 7 | 7.9 | 8.9 | 4.2 | 5.3 | 5.9 | 7.6 |
| | Change ratio (%) | | | | | | | | |
| | Tb | 92 | 90 | 92 | 92 | 94 | 94 | 100 | 99 |
| | Eb | 93 | 84 | 83 | 80 | 97 | 98 | 104 | 97 |
| | M200 | 117 | 135 | 123 | 117 | 108 | 98 | 94 | 101 |
| | After aging for 72 hours at 100°C | | | | | | | | |
| | Tb(MPa) | 18 | 19.7 | 18 | 16.5 | 21 | 21.2 | 21.4 | 18.7 |
| | Eb(%) | 450 | 390 | 320 | 305 | 578 | 510 | 480 | 432 |
| | M200(MPa) | 5.8 | 8.8 | 10 | 11 | 5 | 6.5 | 7.1 | 8.2 |
| | Change ratio (%) | | | | | | | | |
| | Tb | 82 | 81 | 83 | 82 | 85 | 86 | 93 | 93 |
| | Eb | 75 | 71 | 67 | 68 | 92 | 88 | 94 | 92 |
| | M200 | 138 | 169 | 156 | 145 | 128 | 120 | 113 | 109 |
| Tire ability Chunk property new article | | -- | 100 | -- | -- | -- | 100 | -- | -- |
| driven article | | -- | 75 | -- | -- | -- | 90 | -- | -- |

**Table 3**

| | | Example 5 | ∗ C.E. 5 | Example 6 |
|---|---|---|---|---|
| Formulation (parts by weight) | SBR | 100 | 100 | 100 |
| | NR | -- | -- | -- |
| | BR | -- | -- | -- |
| | Carbon black | 50 | 50 | 50 |
| | | | | |
| | Known vulcanization accelerator X | 0.5 | -- | -- |
| | | | | |
| | Known vulcanization accelerator Y | -- | -- | -- |
| | | | | |
| | Vulcanization accelerator A of the present invention | 1 | -- | -- |
| | | | | |
| | Known vulcanization accelerator Z | -- | 1.5 | -- |
| | | | | |
| | Vulcanization accelerator B of the present invention | -- | -- | 1.5 |
| | | | | |
| | Vulcanization accelerator C of the present invention | -- | -- | -- |
| Physical properties | Initial | | | |
| | Tb(MPa) | 24.3 | 24.7 | 24.6 |
| | Eb(%) | 600 | 580 | 580 |
| | M200(MPa) | 4.2 | 5.6 | 5.3 |
| | After aging for 24 hours at 100°C | | | |
| | Tb(MPa) | 23 | 22.2 | 23.4 |
| | Eb(%) | 605 | 560 | 580 |
| | M200(MPa) | 4.5 | 5.8 | 5.4 |
| | Change ratio (%) | | | |
| | Tb | 95 | 90 | 95 |
| | Eb | 101 | 97 | 100 |
| | M200 | 107 | 104 | 102 |
| | After aging for 72 hours at 100°C | | | |
| | Tb(MPa) | 20.9 | 21 | 22.1 |
| | Eb(%) | 560 | 480 | 530 |
| | M200(MPa) | 5.6 | 7.1 | 6.5 |
| | Change ratio (%) | | | |
| | Tb | 86 | 85 | 90 |
| | Eb | 93 | 83 | 91 |
| | M200 | 133 | 127 | 123 |
| Tire ability Chunk property new article | | -- | -- | -- |
| driven article | | -- | -- | -- |

| | | | | |
|---|---|---|---|---|
| ∗C.E. : Comparative Example | | | | |

**Table 4**

| | | ∗ C.E. 6 | ∗ C.E. 7 | Example 7 | ∗ C.E. | | Ex. 8 |
|---|---|---|---|---|---|---|---|
| | | | | | 8 | 9 | |
| Formulation (parts by weight) | SBR | -- | -- | -- | 50 | 50 | 50 |
| | NR | 100 | 100 | 100 | 50 | 50 | 50 |
| | BR | -- | -- | -- | -- | -- | -- |
| | Carbon black | 50 | 50 | 50 | 50 | 50 | 50 |
| | | | | | | | |
| | Known vulcanization accelerator X | 1.5 | -- | -- | 1.5 | -- | -- |
| | | | | | | | |
| | Known vulcanization accelerator Y | -- | 1.5 | -- | -- | 1.5 | -- |
| | | | | | | | |
| | Vulcanization accelerator A of the present invention | -- | -- | 1.5 | -- | -- | 1.5 |
| | | | | | | | |
| | Known vulcanization accelerator Z | -- | -- | -- | -- | -- | -- |
| | | | | | | | |
| | Vulcanization accelerator B of the present invention | -- | -- | -- | -- | -- | -- |
| | | | | | | | |
| | Vulcanization accelerator C of the present invention | -- | -- | -- | -- | -- | -- |
| Physical properties | Initial | | | | | | |
| | Tb(MPa) | 27.6 | 27.8 | 28 | 24.8 | 24.5 | 25.4 |
| | Eb(%) | 515 | 505 | 510 | 560 | 565 | 570 |
| | M200(MPa) | 6.9 | 7 | 7.1 | 5.6 | 5.4 | 5.2 |
| | After aging for 24 hours at 100°C | | | | | | |
| | Tb(MPa) | 21.5 | 20.9 | 23 | 20.9 | 20.3 | 22.6 |
| | Eb(%) | 330 | 345 | 450 | 445 | 460 | 485 |
| | M200(MPa) | 12.0 | 9.7 | 10.4 | 8.5 | 6.6 | 7 |
| | Change ratio (%) | | | | | | |
| | Tb | 78 | 75 | 82 | 84 | 83 | 69 |
| | Eb | 64 | 68 | 88 | 79 | 81 | 85 |
| | M200 | 174 | 138 | 146 | 152 | 122 | 135 |
| | After aging for 72 hours at 100°C | | | | | | |
| | Tb(MPa) | 18.9 | 14.4 | 20.6 | 18.5 | 16.4 | 19.4 |
| | Eb(%) | 275 | 220 | 360 | 360 | 350 | 420 |
| | M200(MPa) | 12.5 | 10.1 | 11.2 | 9.2 | 7.3 | 7.5 |
| | Change ratio (%) | | | | | | |
| | Tb | 68 | 52 | 74 | 75 | 67 | 76 |
| | Eb | 53 | 44 | 71 | 64 | 62 | 74 |
| | M200 | 181 | 144 | 158 | 164 | 135 | 144 |

| | | | | | | | |
|---|---|---|---|---|---|---|---|
| ∗CE.: Comparative Example | | | | | | | |

**Table 5**

| | | ∗ C.E. 10 | Example | | ∗ C.E. | | Example | |
|---|---|---|---|---|---|---|---|---|
| | | | 9 | 10 | 11 | 12 | 11 | 12 |
| Formulation (parts by weight) | SBR | -- | -- | -- | -- | -- | -- | -- |
| | NR | 100 | 100 | 100 | 100 | 100 | 100 | 100 |
| | BR | -- | -- | -- | -- | -- | -- | -- |
| | Carbon black | 50 | 50 | 50 | 30 | 70 | 30 | 70 |
| | | | | | | | | |
| | Known vulcanization accelerator X | -- | -- | -- | 1.5 | 1.5 | -- | -- |
| | | | | | | | | |
| | Known vulcanization accelerator Y | -- | -- | -- | -- | -- | -- | -- |
| | | | | | | | | |
| | Vulcanization accelerator A of the present invention | -- | -- | -- | -- | -- | 1.5 | 1.5 |
| | | | | | | | | |
| | Known vulcanization accelerator Z | 0.8 | -- | -- | -- | -- | -- | -- |
| | | | | | | | | |
| | Vulcanization accelerator B of the present invention | -- | 0.8 | -- | -- | -- | -- | -- |
| | | | | | | | | |
| | Vulcanization accelerator C of the present invention | -- | -- | 0.8 | -- | -- | -- | -- |
| Physical properties | Initial | | | | | | | |
| | Tb(MPa) | 28 | 28.2 | 27.9 | 27.8 | 26.7 | 27.6 | 25.9 |
| | Eb(%) | 495 | 515 | 505 | 620 | 390 | 630 | 410 |
| | M200(MPa) | 6.8 | 6.5 | 6.6 | 4.7 | 8.9 | 4.5 | 8.5 |
| | After aging for 24 hours at 100°C | | | | | | | |
| | Tb(MPa) | 23.2 | 24.5 | 24.3 | 21.1 | 19.2 | 22.9 | 21.5 |
| | Eb(%) | 345 | 405 | 405 | 385 | 230 | 555 | 335 |
| | M200(MPa) | 10.2 | 9.5 | 9.5 | 7.9 | 14.8 | 6.7 | 13 |
| | Change ratio (%) | | | | | | | |
| | Tb | 83 | 87 | 87 | 76 | 72 | 83 | 83 |
| | Eb | 70 | 79 | 80 | 62 | 59 | 88 | 82 |
| | M200 | 150 | 146 | 144 | 168 | 166 | 149 | 153 |
| | After aging for 72 hours at 100°C | | | | | | | |
| | Tb(MPa) | 19.6 | 21.7 | 21.2 | 19.2 | 17.4 | 20.1 | 19.2 |
| | Eb(%) | 305 | 370 | 360 | 340 | 190 | 440 | 295 |
| | M200(MPa) | 11.2 | 10.1 | 10.3 | 8.4 | -- | 7.2 | 14 |
| | Change ratio (%) | | | | | | | |
| | Tb | 70 | 77 | 76 | 69 | 65 | 73 | 74 |
| | Eb | 62 | 72 | 71 | 55 | 49 | 70 | 72 |
| | M200 | 165 | 155 | 156 | 179 | -- | 138 | 165 |

| | | | | | | | | |
|---|---|---|---|---|---|---|---|---|
| ∗CE.: Comparative Example | | | | | | | | |

**Table 6**

| | | ∗ C.E. 13 | Example 13 | ∗ C.E. 14 | Example 14 |
|---|---|---|---|---|---|
| Formulation (parts by weight) | SBR | 70 | 70 | 50 | 50 |
| | NR | 30 | 30 | 30 | 30 |
| | BR | -- | -- | 20 | 20 |
| | Carbon black | 50 | 50 | 50 | 50 |
| | | | | | |
| | Known vulcanization accelerator X | 1.5 | -- | 1.5 | -- |
| | | | | | |
| | Known vulcanization accelerator Y | -- | -- | -- | -- |
| | | | | | |
| | Vulcanization accelerator A of the present invention | -- | 1.5 | -- | 1.5 |
| | | | | | |
| | Known vulcanization accelerator Z | -- | -- | -- | -- |
| | | | | | |
| | Vulcanization accelerator B of the present invention | -- | -- | -- | -- |
| | | | | | |
| | Vulcanization accelerator C of the present invention | -- | -- | -- | -- |
| Physical properties | Initial | | | | |
| | Tb(MPa) | 24.8 | 25.3 | 25.1 | 24.6 |
| | Eb(%) | 570 | 580 | 580 | 570 |
| | M200(MPa) | 4.7 | 4.4 | 4.6 | 4.5 |
| | After aging for 24 hours at 100°C | | | | |
| | Tb(MPa) | 21.3 | 22 | 21 | 20.7 |
| | Eb(%) | 460 | 490 | 480 | 485 |
| | M200(MPa) | 7.0 | 5.9 | 7.3 | 6.7 |
| | Change ratio (%) | | | | |
| | Tb | 86 | 87 | 84 | 84 |
| | Eb | 81 | 84 | 83 | 85 |
| | M200 | 149 | 134 | 159 | 149 |
| | After aging for 72 hours at 100°C | | | | |
| | Tb(MPa) | 18.2 | 19.2 | 19.1 | 19.2 |
| | Eb(%) | 320 | 360 | 310 | 340 |
| | M200(MPa) | 9.7 | 8.1 | 10.0 | 8.0 |
| | Change ratio (%) | | | | |
| | Tb | 73 | 76 | 76 | 78 |
| | Eb | 56 | 62 | 53 | 60 |
| | M200 | 206 | 185 | 217 | 178 |

| | | | | | |
|---|---|---|---|---|---|
| ∗CE.: Comparative Example | | | | | |

Explanation of the rubber raw materials and blending agents in Tables 2 to 6:
1) SBR: SBR1500 (manufactured by Japan Synthetic Rubber Co., Ltd.)
2) BR: BR01 (manufactured by Japan Synthetic Rubber Co., Ltd.)
3) Accelerator X: 2-benzothiazolyl disulfide
4) Accelerator Y: 4-methyl-2-benzothiazolyl disulfide
5) Accelerator A: di-4-ethoxy-2-benzothiazolyl disulfide
6) Accelerator Z: N-tert-butyl-2-benzothiazolylsulfenamide
7) Accelerator B: N-tert-butyl-4-ethoxy-2-benzothiazolylsulfenamide
8) Accelerator C: N,N-tert-butyl-4-ethoxy-2-benzothiazolylsulfenimide

The results when the amount of conventional 2-benzothiazolyl disulfide was changed are shown in Comparative Examples 1 to 4, and the results when the amounts of di-4-ethoxy-2-benzothiazolyl disulfide were changed are shown in Examples 1 to 4. It is known that lowering of breaking strength (Tb) after heat aging (especially when aging is over a long period) is suppressed by introduction of an ethoxy group into a benzothiazole ring. Di-4-ethoxy-2-benzothiazolyl disulfide markedly improves elongation at break (Eb) after heat aging, since it also suppresses increase of modulus during heat aging. Further, conventional 2-benzothiazolyl disulfide can also be used together with di-4-ethoxy-2-benzothiazolyl disulfide, although the effect is reduced (Example 5). The results when conventional N-tert-butyl-2-benzothiazolylsulfenamide was used are shown in Comparative Example 5, and the results when N-tert-butyl-4-ethoxy-2-benzothiazolylsulfenamide was used are shown in Example 6. When the sulfenamide type compound is used, superiority is maintained although the effect of the ethoxy group is reduced as compared with the disulfide type compound.

Next, the results when the amount of NR was 100 parts by weight are explained. When conventional 2-benzothiazolyl disulfide (Comparative Example 6) is replaced by an equivalent amount of conventional 4-methyl-2-benzothiazolyl disulfide (Comparative Example 7), curing after heat aging is suppressed; however, especially after aging at 100°C for 72 hours, elongation at break is also reduced due to the extreme reduction of breaking strength. On the other hand, when di-4-ethoxy-2-benzothiazolyl disulfide (Example 7) is used, reduction of breaking strength is low, and physical properties after aging which are better than those of Comparative Example 6 are obtained. Also in the formulation of NR/SBR=50/50, the superiority of di-4-ethoxy-2-benzothiazolyl disulfide is apparent (Comparative Examples 8, 9 and Example 8).

In the same way, when conventional N-tert-butyl-2-benzothiazolylsulfenamide (Comparative Example 10) in an NR formulation is replaced with equivalent amounts of N-tert-butyl-4-ethoxy-2-benzothiazolylsulfenamide (Example 9) and N,N-tert-butyl-4-ethoxy-2-benzothiazolylsulfenimide (Example 10), breaking strength after heat aging increases. It is learned that even if the amount of carbon black was changed (Comparative Examples 11, 12 and Examples 11 and 12), or if a mixture of NR/SBR of 30/70 is used (Comparative Example 13 and Example 13), or even if a blend of NR/SBR/BR was used (Comparative Example 14 and Example 14) then di-4-ethoxy-2-benzothiazolyl disulfide had superior breaking properties after heat aging than the conventional 2-benzothiazolyl sulfide.

As described above, it was learned that the rubber composition of the present invention has excellent breaking properties after heat aging. The superiority of the breaking properties after driving is also confirmed by the fact that there is a lower occurrence of chunking after driving in the tires using the rubber compositions of the present invention compared to the tires in the comparative examples.

## Claims

1. A rubber composition comprising 0.2 to 10 parts by weight of at least one compound selected from 2-mercaptobenzothiazole compounds containing an alkoxy group represented by the following general formulae (I), (II) and (III) based on 100 parts by weight of at least one rubber raw material selected from natural rubber and diene-based synthetic rubbers: 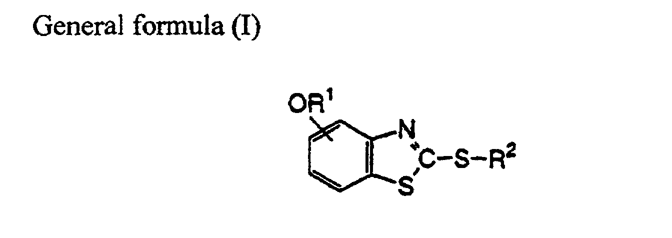 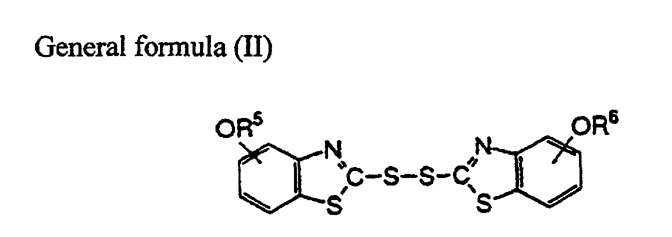 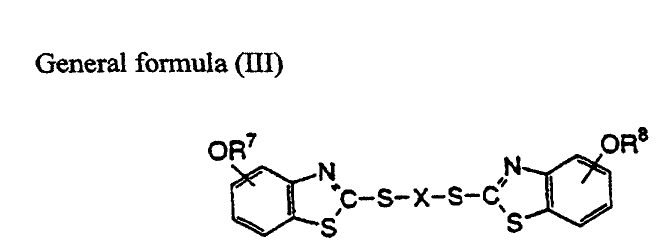 wherein the position of the alkoxy group in the benzothiazole ring in the general formulae (I), (II) and (III) is 4;
wherein R¹ represents an alkyl group, an alkenyl group or a cycloalkyl group having 1 to 8 carbon atoms;
R² represents a hydrogen atom or an amino group represented by -N(R³)R⁴;
R³ and R⁴ each independently represent a hydrogen atom or an alkyl group having 2 to 4 carbon atoms or a cyclohexyl group, wherein, R³ and R⁴ do not simultaneously represent a hydrogen atom;
R⁵ and R⁶ each independently represent an alkyl group, an alkenyl group or a cycloalkyl group having 1 to 8 carbon atoms;
X represents a Zn atom, a Cu atom or an amino group represented by >N-R⁹;
R⁹ represents an alkyl group having 2 to 4 carbon atoms or a cyclohexyl group; and
R⁷ and R⁸ have the same meaning as R⁵.

2. A rubber composition as claimed in claim 1, **characterized in that** said alkoxy group is selected from a methoxy group, an ethoxy group and a butoxy group.

3. A rubber composition as claimed in claim 1, **characterized in that** said alkoxy group is an ethoxy group.

4. A rubber composition as claimed in any of claims 1 to 3, **characterized in that** the 2-mercaptobenzothiazole compound containing an alkoxy group represented by the general formula (I) is N-tert-butyl-4-ethoxy-2-benzothiazolylsulfenamide or N-cyclohexyl-4-ethoxy-2-benzothiazolylsulfenamide.

5. A rubber composition as claimed in any of claims 1 to 3, **characterized in that** the 2-mercaptobenzothiazole compound containing an alkoxy group represented by the general formula (II) is di-4-ethoxy-2-benzothiazolyl disulfide.

6. A rubber composition as claimed in any of claims 1 to 5, **characterized in that** said rubber raw material contains not less than 50 parts by weight of natural rubber and/or synthetic polyisoprene rubber based on 100 parts by weight of the rubber raw material.

## Patentansprüche

1. Kautschukzusammensetzung, umfassend 0,2 bis 10 Gew.Teile von mindestens einer Verbindung, ausgewählt aus 2-Mercaptobenzothiazolverbindungen, enthaltend eine Alkoxygruppe, dargestellt durch die folgenden allgemeinen Formeln (I), (II) und (III), basierend auf 100 Gew.Teilen von mindestens einem Kautschukrohmaterial, ausgewählt aus natürlichem Kautschuk und auf Dien basierendem synthetischen Kautschuk : 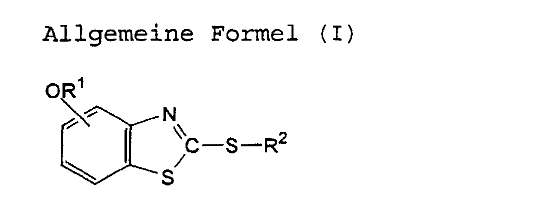 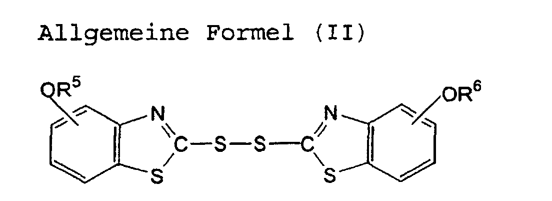 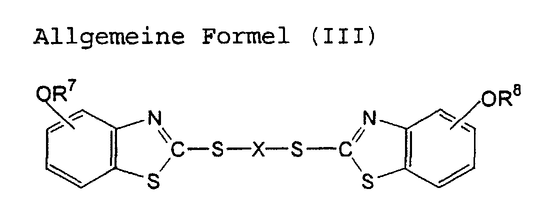 worin die Position der Alkoxygruppe in dem Benzothiazolring in den allgemeinen Formeln (I), (II) und (III) 4 ist;
worin R¹ eine Alkylgruppe, eine Alkenylgruppe oder eine Cycloalkylgruppe mit 1 bis 8 Kohlenstoffatomen darstellt;
R² bedeutet ein Wasserstoffatom oder eine Aminogruppe, dargestellt durch -N(R³)R⁴;
R³ und R⁴ bedeuten jeweils unabhängig ein Wasserstoffatom oder eine Alkylgruppe mit 2 bis 4 Kohlenstoffatomen oder eine Cyclohexylgruppe, worin R³ und R⁴ nicht gleichzeitig ein Wasserstoffatom bedeuten;
R⁵ und R⁶ bedeuten jeweils unabhängig ein Alkylgruppe, eine Alkenylgruppe oder eine Cycloalkylgruppe mit 1 bis 8 Kohlenstoffatomen;
X bedeutet ein Zn-Atom, ein Cu-Atom oder eine Aminogruppe, dargestellt durch >N-R⁹;
R⁹ bedeutet eine Alkylgruppe mit 2 bis 4 Kohlenstoffatomen oder eine Cyclohexylgruppe; und
R⁷ und R⁸ haben dieselbe Bedeutung wie R⁵.

2. Kautschukzusammensetzung gemäß Anspruch 1, **dadurch gekennzeichnet, daß** die Alkoxygruppe ausgewählt ist aus einer Methoxygruppe, einer Ethoxygruppe und einer Butoxygruppe.

3. Kautschukzusammensetzung gemäß Anspruch 1, **dadurch gekennzeichnet, daß** die Alkoxygruppe eine Ethoxygruppe ist.

4. Kautschukzusammensetzung gemäß einem der Ansprüche 1 bis 3, **dadurch gekennzeichnet, daß** die 2-Mercaptobenzothiazolverbindung, enthaltend eine Alkoxygruppe, dargestellt durch die allgemeine Formel (I) N-tert-Butyl-4-ethoxy-2-benzothiazolylsulfenamid oder N-Cyclohexyl-4-ethoxy-2-benzothiazolylsulfenamid ist.

5. Kautschukzusammensetzung gemäß einem der Ansprüche 1 bis 3, **dadurch gekennzeichnet, daß** die 2-Mercaptobenzothiazolverbindung, enthaltend eine Alkoxygruppe, dargestellt durch die allgemeine Formel (II) Di-4-ethoxy-2-benzothiazolyldisulfid ist.

6. Kautschukzusammensetzung gemäß einem der Ansprüche 1 bis 5, **dadurch gekennzeichnet, daß** das Kautschukrohmaterial nicht weniger als 50 Gew.Teile natürlichen Kautschuk und/oder synthetischen Polyisoprenkautschuk, basierend auf 100 Gew.Teilen des Kautschukrohmaterials, enthält.

## Revendications

1. Composition de caoutchouc comprenant 0,2 à 10 parties en poids d'au moins un composé sélectionné parmi les composés 2-mercaptobenzothiazole contenant un groupe alcoxy représenté par les formules générales suivantes (I), (II) et (III) basées sur 100 parties en poids d'au moins une matière première de caoutchouc sélectionnée parmi du caoutchouc naturel et des caoutchoucs synthétiques à base de diène : 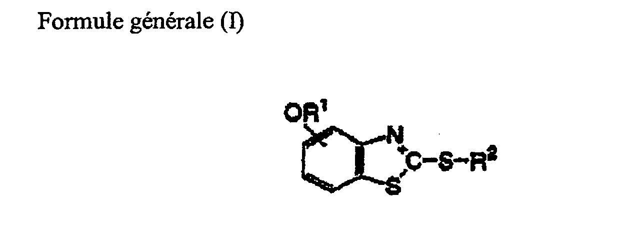 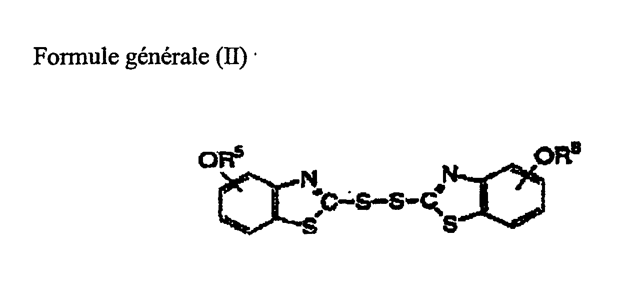 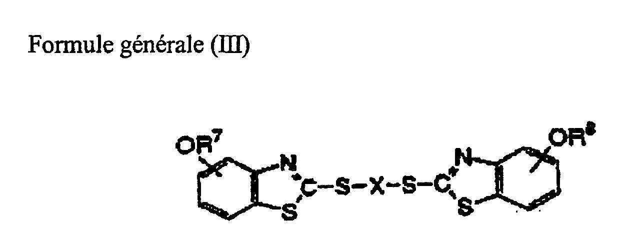 où la position du groupe alcoxy sur le cycle benzothiazole dans les formules générales (I), (II) et (III) est la position 4 ;
où R¹ représente un groupe alkyle, un groupe alcényle ou un groupe cycloalkyle ayant 1 à 8 atomes de carbone ;
R² représente un atome d'hydrogène ou un groupe amino représenté par -N(R³)R⁴;
R³ et R⁴ représentent chacun indépendamment un atome d'hydrogène ou un groupe alkyle ayant 2 à 4 atomes de carbone ou un groupe cyclohexyle, où R³ et R⁴ ne représentent pas simultanément un atome d'hydrogène ;
R⁵ et R⁶ représentent chacun indépendamment un groupe alkyle, un groupe alcényle ou un groupe cycloalkyle ayant 1 à 8 atomes de carbone ;
X représente un atome de Zn, un atome de Cu ou un groupe amino représenté par >N-R⁹ ;
R⁹ représente un groupe alkyle ayant 2 à 4 atomes de carbone ou un groupe cyclohexyle ; et
R⁷ et R⁸ ont la même signification que R⁵.

2. Composition de caoutchouc selon la revendication 1, **caractérisée en ce que** ledit groupe alcoxy est sélectionné parmi un groupe méthoxy, un groupe éthoxy et un groupe butoxy.

3. Composition de caoutchouc selon la revendication 1, **caractérisée en ce que** ledit groupe alcoxy est un groupe éthoxy.

4. Composition de caoutchouc selon l'une quelconque des revendications 1 à 3, **caractérisée en ce que** le composé 2-mercaptobenzothiazole contenant un groupe alcoxy représenté par la formule générale (I) est le N-tert-butyl-4-éthoxy-2-benzothiazolylsulfénamide ou le N-cyclohexyl-4-éthoxy-2-benzothiazolylsulfénamide.

5. Composition de caoutchouc selon l'une quelconque des revendications 1 à 3, **caractérisée en ce que** le composé 2-mercaptobenzothiazole contenant un groupe alcoxy représenté par la formule générale (II) est le di-4-éthoxy-2-benzothiazolyldisulfure.

6. Composition de caoutchouc selon l'une quelconque des revendications 1 à 5, **caractérisée en ce que** ladite matière première de caoutchouc ne contient pas moins de 50 parties en poids de caoutchouc naturel et/ou de caoutchouc synthétique de polyisoprène basé sur 100 parties en poids de la matière première de caoutchouc.
